# EUROPEAN PATENT SPECIFICATION

(11) **EP 0 618 057 B1**
(45) Date of publication and mention of the grant of the patent: **28.05.1997**
(21) Application number: 94104552.8
(22) Date of filing: 23.03.1994
(51) Int. Cl.: B29C 45/72, B29C 45/46, B29C 70/00, B29C 35/08

(54) **Resin transfer moulding**
Transfergiessen von Harz
Moulage par transfert de résine

(30) Priority: 25.03.1993 GB 9306268
(43) Date of publication of application: 05.10.1994
(73) Proprietor: FORD MOTOR COMPANY LIMITED, Brentwood Essex (GB); FORD-WERKE AKTIENGESELLSCHAFT, 50735 Köln (DE); FORD FRANCE S. A., 92506 Rueil-Malmaison Cédex (FR)
(72) Inventor: Hill, David John, Droitwich, Worcs. WR9 8QA (US)
(74) Representative: Messulam, Alec Moses

(56) References cited:
- EP-A- 0 141 531
- EP-A- 0 229 708
- GB-A- 2 198 386
- COMPOSITES MANUFACTURING vol. 3, no. 4 , 1992 , OXFORD GB pages 235 - 249 KENDALL 'Characterization of the resin transfer moulding process'
- PATENT ABSTRACTS OF JAPAN vol. 9, no. 118 (E-316)(1841) 23 May 1985 & JP-A-60 007 136 (TOSHIBA)
- PATENT ABSTRACTS OF JAPAN vol. 8, no. 73 (M-287)(1510) 5 April 1984 & JP-A-58 220 715 (RIZUMU JIDOUSHIYA BUHIN SEIZOU)
- COMPOSITES MANUFACTURING vol. 3, no. 4 , 1992 , OXFORD GB pages 235 - 249 KENDALL 'Characterization of the resin transfer moulding process''Effects of resin preheat on pre-exotherm pressure' *page 246, paragraph 1 - page 247, paragraph 1*

## Description

This invention relates to resin transfer moulding and in particular to an apparatus for resin transfer moulding as well as to a method of resin transfer moulding.

In resin transfer moulding (RTM) a fibrous reinforcement is placed in a mould cavity and the mould is closed. Liquid resin is then injected into the mould cavity so that it flows through the reinforcement to wet the reinforcement thoroughly. The resin is then allowed to cure and after cure the moulded product is ejected from the mould.

It is possible to produce quite complex moulded products in this way. The reinforcement can be formed to provide necessary strength in areas where strength is required, because the reinforcement can be "designed" independently of the moulding process.

For RTM to become a viable process for use in mass production of articles, it is desirable to minimise the cycle time, i.e. the time from ejection of one product from the mould to ejection of the following product from the same mould. There are many factors which can affect the cycle time.

A method of resin transfer moulding is described in the journal Composites Manufacturing, Vol.3, No.4, 1992 at pp 235-249. In this document resin preheating is discussed (p.241) and associated problems are pointed out. This document does also disclose the use of a domestic microwave oven (p.246) as a possible technique for preheating batches of resin, but such a technique cannot be used for heating a continuous stream of resin.

JP-A-60 007 136 describes a process for encapsulating semiconductor components where solid resin pellets are preheated by microwave energy before they are heated again to liquefy the resin and are then pressed into a mould cavity.

According to the present invention, there is provided apparatus for resin transfer moulding, the apparatus comprising a mould, means for heating the mould, a reservoir for containing liquid resin mixed with catalyst at a temperature below the catalyst activation temperature, and a pipe through which resin can flow in a continuous stream from the reservoir to the mould, characterised in that microwave heating means is arranged to heat the resin flowing along the pipe, immediately before the resin enters the mould, so that more heat energy is imparted to the resin at the centre of the pipe than to the resin near to the walls of the pipe.

The invention also provides a method of resin transfer moulding in which liquid catalysed resin flows in a continuous stream into a mould, characterised in that the catalysed resin is heated by microwave heating to a temperature above the resin storage temperature but below the catalyst activation temperature in a microwave mode which heats the centre of the flowing resin preferentially to the edges of the stream, immediately before the resin enters the mould.

There are two time periods to be considered in respect of the process after resin begins to enter the mould. Firstly there is the impregnation time, i.e. the time required for the resin to flow from the resin inlet to all parts of the mould and throughout the reinforcement whilst ensuring thorough wetting-out of the reinforcement. To reduce this impregnation time the viscosity of the resin should be as low as possible. One method of achieving this is to heat the resin, but not to heat it so far that cure takes place before the resin has flowed to all parts of the mould.

Secondly it is necessary to consider the time from entry of the resin into the mould to completion of resin cure. For the thermoset resins used in resin transfer moulding curing takes place by raising the temperature of the resin. The higher the temperature is raised the faster the cure.

In order to reduce the cure time as far as possible, it is necessary to heat the mould. In order to reduce the impregnation time it is proposed to heat the resin before it is introduced into the mould The heating of both parts of the apparatus must however be done under fully controlled conditions to avoid premature cure of the resin and to prevent waste of resin between cycles.

In most cases the resin will flow to the mould along a tubular pipe. The resin flow will be laminar, that is the resin at the centre of the tube will flow faster than the resin closer to the edges. In order to obtain a level temperature gradient across the flowing resin, it is desirable to impart more heat energy to the resin at the centre of the tube than to the resin near to the walls of the tube. This type of heating profile can conveniently be achieved using microwave heating. Where microwave heating is used, the microwaves will be generated by a magnetron and will be conveyed, via a waveguide, to an applicator where they will be adsorbed (at least in part) by the resin which will thereby be heated.

The use of a TM₀₂₀ mode applicator is particularly appropriate. The applicator preferably takes the form of a cylindrical housing through which a cylindrical resin-carrying chamber extends.

The cylindrical chamber must have walls which are transparent to microwaves, and a suitable material for these walls is PTFE. The diameter of the cylindrical chamber may be larger than the diameter of the tubular pipe through which the resin flows into the chamber.

The interface between the waveguide and the applicator may include a window, the size of which can be varied to provide tuning to the applicator to obtain the desired TM₀₂₀ resonant mode characteristic.

The invention will now be further described, by way of example, with reference to the accompanying drawings, in which:
Figure 1 is a schematic view illustrating a conventional resin transfer moulding process;
Figure 2 schematically illustrates resin transfer moulding apparatus in accordance with the invention;
Figure 3 is a plan view of a microwave applicator for use in the apparatus of Figure 2;
Figure 4 is a cross-section through the applicator of Figure 3;
Figure 5 is a graphical illustration of the electric field in the applicator of Figures 3 and 4; and
Figures 6 and 7 illustrate, respectively, the cure and impregnation times of apparatus in accordance with the invention and apparatus in accordance with the prior art.

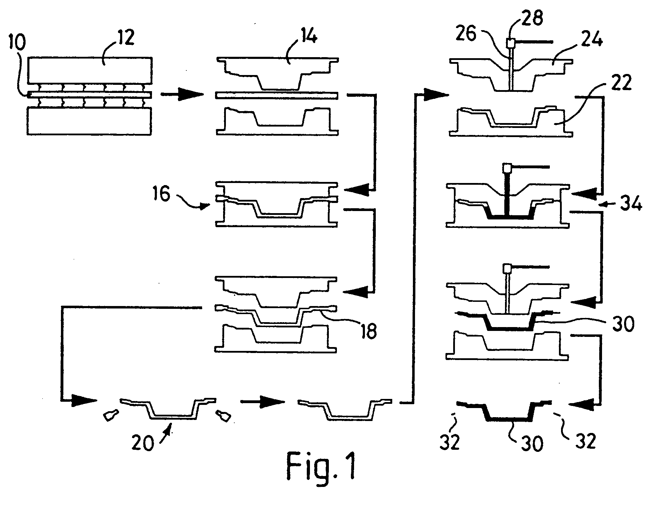

Figure 1 illustrates a process where a product 30 is made by resin transfer moulding. A reinforcing mat is first made into a preform and is then placed into a mould into which resin is introduced to produce the product. Figure 1 shows on the left hand side the preparation of the preform and on the right hand side the moulding process itself. As a first stage in the preparation of the preform, a mat 10 is heated in a heater 12 to soften a thermoplastic binding agent so that the mat can be shaped. The mat may be made up from a single type of fibrous reinforcement (e.g. glass fibres, carbon fibres, Kevlar [Registered Trade Mark]) coated with a binding agent and these fibres can be combined in any suitable way in accordance with the demand which will eventually be made on the final product.

The mat is then shaped in a tool 14 which, when closed, cools the mat to solidify the binding agent thus retaining the desired shape. The mat is trimmed at 20 to form a preform 18 which is then placed in the bottom half 22 of a mould. The mould has a top half 24 with an inlet 26 for resin, the flow of which is controlled by a valve 28. Once the preform is in position the mould halves 22, 24 are closed and resin is injected through the inlet 26 to fill the mould cavity and to wet-out the preform 18 thoroughly. Once the mould has been filled with resin, it is left for sufficient length of time for the resin to cure, and the mould is then opened so that the product 30 can be ejected. A final stage in the process is the removal of flash 32 from the edges of the product 30. The present invention is particularly concerned with the stage of injecting the resin which stage is indicated by the reference numeral 34 in Figure 1.

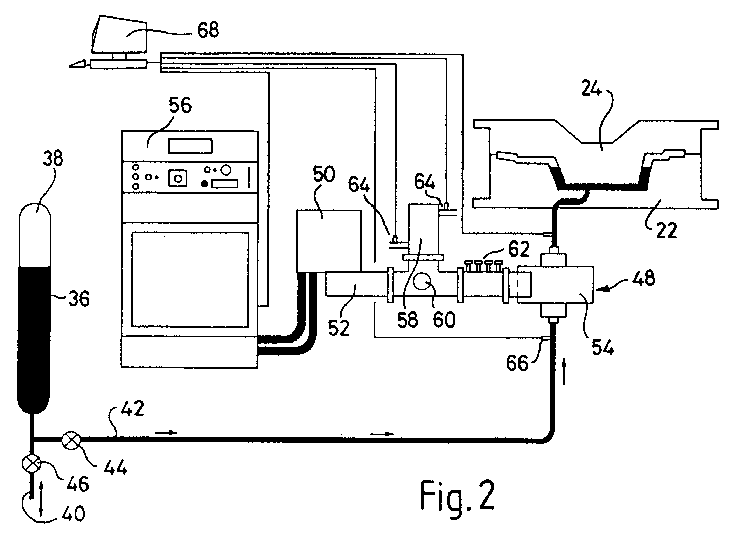

Figure 2 shows the resin handling equipment by means of which the resin is introduced into the mould 22, 24.

Resin mixed with catalyst is stored in a reservoir 36 beneath an air space 38. The reservoir 36 is replenished through a resin inlet 40, and when resin is required at the mould 22, 24 it is fed in that direction along a flow pipe 42. To replenish the reservoir 36, the valve 44 is closed, the valve 46 is opened and air is pumped out of the space 38 to draw resin into the reservoir through the inlet 40. To pump resin to the mould 22,24, the valve 46 is closed, the valve 44 is opened and the space 38 is pressurised to force resin along the pipe 42.

The catalysed resin is maintained in the reservoir 36 at a temperature significantly below the catalyst activation temperature so that a reservoir of catalysed resin can be maintained in a usable condition for an extended period of time.

When resin is fed to the mould 22, 24 it flows along the pipe 42 to a microwave heating unit 48 where the temperature of the resin is raised immediately before the resin flows into the mould cavity. The microwave heating unit 48 comprises a magnetron 50 in which the microwaves are generated, a waveguide 52 along which the waves pass and an applicator 54 in which the waves act on the resin to raise the resin temperature. The magnetron 50 is controlled by a control unit 56. The waveguide includes a water load 58 in a branch of the waveguide 52, and a circulator 60 controls the passage of microwaves along the waveguide. Tuning screws 62 in the waveguide can be screwed in or out to alter the shape of the electromagnetic field within the waveguide. The waveguide 52 and the circulator 60 are set up so that microwaves produced by the magnetron 50 are directed entirely to the applicator 54. Microwave energy will be absorbed by the resin in the pipe 42, but some of the microwave energy will not be absorbed and will be reflected. The circulator 60 will direct the reflected energy into the water load 58 through which water at a known flow rate passes. By monitoring the temperature rise of the water in the water load 58, and by knowing the quantity of microwave energy produced by the magnetron 50 it is possible to obtain a result relating to the quantity of energy or power absorbed by the resin.

In order to be able to control the system, thermocouples 64 monitor the water temperature and thermocouples 66 monitor the resin temperature. Signals from these thermocouples and from the control unit 56 are all fed to a processor unit 68 which can produce a feedback signal to control the control unit 56 and thus to control the magnetron output.

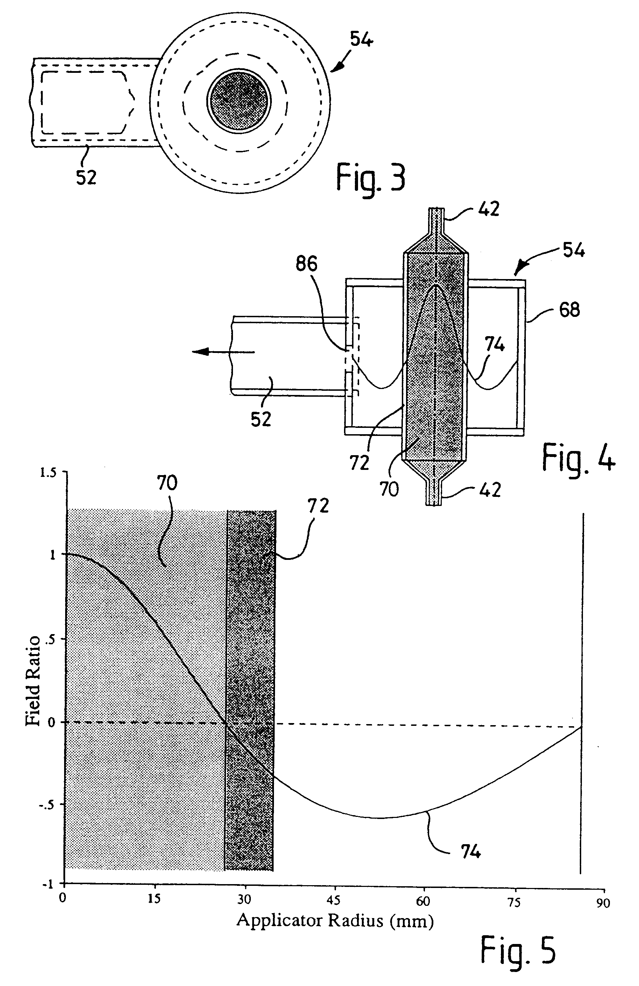

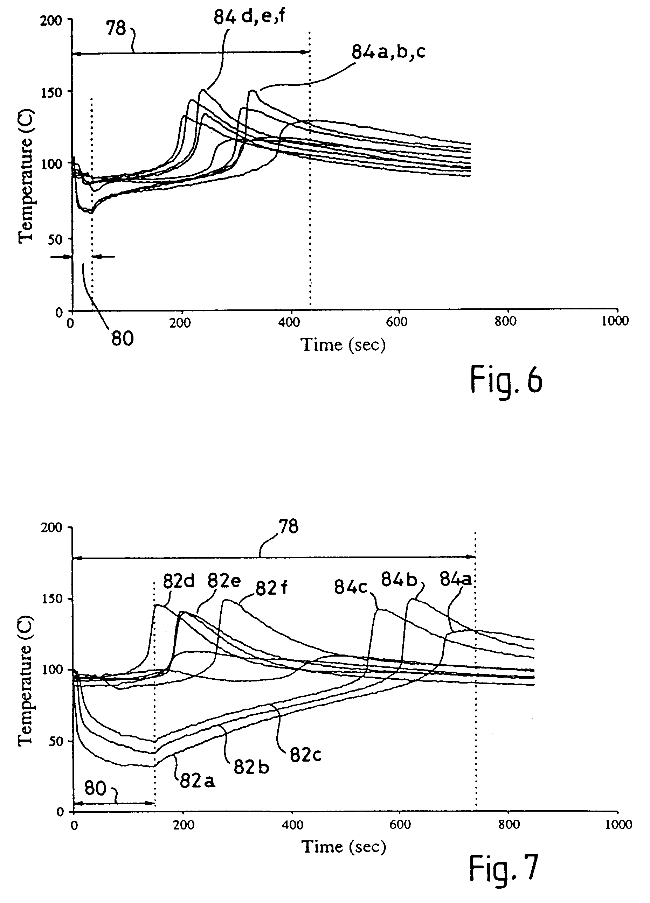

The applicator itself is shown in more detail in Figures 3 and 4. It comprises an enclosed drum-like housing 68 made of a metal such as brass which reflects microwaves. At the centre of the housing there is a channel through which resin 70 flows. The channel is formed by a chamber 72 of PTFE which is connected in series with the resin feed pipe 42, as shown in Figure 4. The PTFE material is transparent to, and does not absorb, microwaves.

The dimensions of the housing 68 are critical in ensuring that the microwave resonance mode is appropriate to the application. Microwave resonance modes are denoted by TM (transverse magnetic) notation. Typical TM notations are TM₀₁₁ and TN₀₂₀. The first digit after the "TM" denotes the number of complete cycles of the electric field in the angular direction which are found during one revolution around an axis. The second digit relates to the number of minima of the electric field in a radial direction from the axis to the periphery. The third digit is the number of half wavelengths in the electric field in the axial direction of a standing wave in the applicator.

In order to provide some degree of tuning of the applicator cavity 68, the waveguide 52 ends in a metallic i.e. reflective, window 86, the size of which can be varied to provide a degree of fine tuning. Varying the window size affects the amount of energy coupled into the applicator, i.e. different sizes vary the amount of energy to be reflected and hence absorbed by the water load 58.

Figure 4 shows a waveform 74 in the housing 68 which waveform is a TM₀₂₀ waveform. Figure 5 shows this in more detail and it will be seen that the field ratio is zero at the point where the resin 70 lies against the wall of the PTFE chamber 72. There will thus be no heating effect from the microwaves at this wall. The maximum heating will be at the centre of the cavity 72 with a gradually increasing heating effect from the walls towards the centre.

It would be highly desirable to make the profile of the waveform 74 to coincide with the velocity profile of the resin flowing along the cavity because this should then lead to a substantially uniform temperature distribution across the advancing resin at any point.

It is a particular advantage of microwave heating that it can be switched on or off over very short periods. Resin transfer moulding is an intermittent process, ie once a mould has been filled with resin, the resin flow has to stop and wait until the product has been ejected before the flow can be restarted to refill the mould in the next cycle. In order to avoid waste of resin, it is important that the resin does not degrade whilst it is stationary in the feed pipe, and the use of microwave heating which can be switched on only whilst the resin is flowing and which imposes no residual thermal load on the resin can be very effective. In practice the microwave circuit may be switched off a short time period before the end of injection, so that when injection comes to an end, the feed pipe 42 is completely filled with resin which has not been subjected to any heating at all.

Figures 6 and 7 are temperature versus time profiles. In Figure 7, which represents the prior art where the incoming resin is unheated the total cycle time 78 is over 700 seconds, and the impregnation time 80 is about 150 seconds. In this prior art apparatus, the mould is held at a desired, elevated temperature before any resin is introduced. When the cold resin is introduced, the part of the mould around the resin inlet experiences a "thermal quench", ie the temperature of the mould is caused to fall because of the influence of the incoming cold resin. As the contact time between the resin and the mould increases, so the resin heats up. When the resin reaches a certain temperature level as a result of being heated by the hotter mould walls, an exothermic reaction takes place producing temperature peaks 82. As the reaction continues, the exothermic effect reduces so the temperature decays.

Considering Figure 7, the traces 82a, 82b, 82c are produced from temperature sensors located close to the resin inlet. It will be seen that there is a sharp temperature drop as cold resin is first introduced. When impregnation is complete, the temperature starts to rise until it reaches the threshold level which results in the exothermic peaks at 84a, 84b and 84c. In contrast the traces 82d, 82e, 82f relate to temperature sensors located remote from the resin inlet. By the time the resin reaches these points, the resin has been heated by contact with the tool and consequently the exothermic peaks take place relatively early in the cycle. As a result, and as is shown clearly by Figure 7, curing takes place much earlier at the remote part of the tool than it does close to the inlet and since the product cannot be ejected until curing is complete, curing takes a considerable period of time.

However in contrast when the resin is pre-heated, a situation is produced as shown in Figure 6, where there is very little temperature drop (thermal shock) when the resin enters the mould. The exothermic peaks 84d, e and f and the peaks 84a, b and c are very close together. In fact what has happened is that the peaks 84d, e and f are occurring at about the same point in time as in Figure 7, but the peaks 84a, b and c are occurring much sooner and much closer to the other set of peaks. The overall cycle time is then dramatically reduced.

## Claims

1. A method of resin transfer moulding in which liquid catalysed resin flows in a continuous stream into a mould (24), characterised in that the catalysed resin is heated by microwave heating to a temperature above the resin storage temperature but below the catalyst activation temperature in a microwave mode which heats the centre of the flowing resin preferentially to the edges of the stream, immediately before the resin enters the mould.

2. A method as claimed in Claim 1, wherein the microwave mode is a TM₀₂₀ mode.

3. Apparatus for resin transfer moulding, the apparatus comprising a mould (24), means for heating the mould, a reservoir (36) for containing liquid resin mixed with catalyst at a temperature below the catalyst activation temperature, and a pipe (42) through which resin can flow in a continuous stream from the reservoir to the mould, characterised in that microwave heating means (48) is arranged to heat the resin flowing along the pipe (42), immediately before the resin enters the mould (24), so that more heat energy is imparted to the resin at the centre of the pipe than to the resin near to the walls of the pipe.

4. Apparatus as claimed in Claim 3, wherein the microwaves are conveyed to an applicator (54) where they operate in a TM₀₂₀ mode.

5. Apparatus as claimed in Claim 4, wherein the applicator (54) takes the form of a cylindrical housing through which a cylindrical resin-carrying chamber (72) extends.

6. Apparatus as claimed in Claim 5, wherein the cylindrical chamber (72) has walls which are transparent to microwaves.

7. Apparatus as claimed in Claim 6, wherein the chamber walls are of polytetrafluoroethylene (PTFE).

8. Apparatus as claimed in any one of Claims 5 to 7, wherein the diameter of the cylindrical chamber (72) is larger than the diameter of the tubular pipe (42) through which the resin flows into the chamber (72).

9. Apparatus as claimed in any one of Claims 4 to 8, wherein microwaves are introduced to the applicator (54) from a waveguide (52), and the interface between the waveguide and the applicator includes a window (86), the size of which can be varied.

## Patentansprüche

1. Ein Verfahren zum Transfergießen von Harz, in dem flüssiges, katalysiertes Harz in einem kontinuierlichen Strom in eine Form (24) strömt, dadurch gekennzeichnet, daß das katalysierte Harz unmittelbar vor dem Eintritt des Harzes in die Form durch eine Erwärmung mit Mikrowellen auf eine Temperatur oberhalb der Lagertemperatur des Harzes, aber unterhalb der Aktivierungstemperatur des Katalysators in einem Mikrowellenmodus erwärmt wird, der den Innenbereich des fließenden Harzes bevorzugt vor den Rändern des Stroms erwärmt.

2. Ein Verfahren nach Anspruch 1, worin der Mikrowellenmodus ein TM₀₂₀-Modus ist.

3. Ein Gerät zum Transfergießen von Harz, wobei das Gerät eine Form (24) umfaßt sowie eine Vorrichtung zur Erwärmung der Form, ein Reservoir (36) zur Aufnahme von flüssigem Harz, das mit Katalysator gemischt ist und sich bei einer Temperatur unterhalb der Aktivierungstemperatur des Katalysators befindet, und eine Leitung (42), durch die Harz in einem kontinuierlichen Strom aus dem Reservoir in die Form fließen kann, dadurch gekennzeichnet, daß die Mikrowellenheizvorrichtung (48) so angeordnet ist, daß sie das Harz, das die Leitung (42) entlang strömt, unmittelbar vor dem Eintreten des Harzes in die Form (24) erwärmt, so daß dem Harz in der Mitte der Leitung mehr Wärmeenergie zugeführt wird als dem Harz nahe der Wände der Leitung.

4. Ein Gerät nach Anspruch 3, worin die Mikrowellen an eine Bestrahlungsvorrichtung (54) geleitet werden, wo sie in einem TM₀₂₀-Modus wirken.

5. Ein Gerät nach Anspruch 4, worin die Bestrahlungsvorrichtung (54) die Form eines zylindrischen Gehäuses besitzt, durch das eine zylindrische Kammer (72) verläuft, die das Harz aufnimmt.

6. Ein Gerät nach Anspruch 5, worin die zylindrische Kammer (72) Wände aufweist, die für Mikrowellen transparent sind.

7. Ein Gerät nach Anspruch 6, worin die Wände der Kammer aus Polytetrafluorethylen (PTFE) bestehen.

8. Ein Gerät nach irgendeinem der Ansprüche 5 bis 7, worin der Durchmesser der zylindrischen Kammer (72) größer als der Durchmesser der rohrförmigen Leitung (42) ist, durch die das Harz in die Kammer (72) strömt.

9. Ein Gerät nach irgendeinem der Ansprüche 4 bis 8, worin die Mikrowellen in die Bestrahlungsvorrichtung (54) über einen Wellenleiter (52) eingeführt werden, und worin die Schnittstelle zwischen dem Wellenleiter und der Bestrahlungsvorrichtung ein Fenster (86) umfaßt, dessen Größe verändert werden kann.

## Revendications

1. Procédé de moulage de résine par transfert dans lequel de la résine liquide contenant un catalyseur s'écoule en un flux continu jusque dans un moule (24), caractérisé en ce que la résine contenant un catalyseur est chauffée par chauffage hyperfréquence jusqu'à une température supérieure à la température de stockage de la résine mais inférieure à la température d'activation du catalyseur dans un mode hyperfréquence qui chauffe le centre de la résine en écoulement par préférence aux bords du flux, juste avant que la résine ne pénètre dans le moule.

2. Procédé selon la revendication 1, dans lequel le mode hyperfréquence est un mode TM₀₂₀.

3. Dispositif pour le moulage de résine par transfert, le dispositif comprenant un moule (24), des moyens de chauffage du moule, un réservoir (36) destiné à contenir de la résine liquide mélangée avec un catalyseur à une température inférieure à la température d'activation du catalyseur, et un tuyau (42) au travers duquel la résine peut s'écouler en un flux continu depuis le réservoir jusqu'au moule, caractérisé en ce que des moyens de chauffage hyperfréquence (48) sont agencés pour chauffer la résine s'écoulant le long du tuyau (42), juste avant que la résine ne pénètre dans le moule (24), de façon à appliquer plus d'énergie calorifique à la résine située au centre du tuyau qu'à la résine proche des parois du tuyau.

4. Dispositif selon la revendication 3, dans lequel les hyperfréquences sont acheminées jusqu'à un applicateur (54) où elles agissent suivant un mode TM₀₂₀.

5. Dispositif selon la revendication 4, dans lequel l'applicateur (54) prend la forme d'un logement cylindrique au travers duquel s'étend une chambre cylindrique d'écoulement de résine (72).

6. Dispositif selon la revendication 5, dans lequel la chambre cylindrique (72) comporte des parois qui sont transparentes aux hyperfréquences.

7. Dispositif selon la revendication 6, dans lequel les parois de la chambre sont faites de polytétrafluoroéthylène (PTFE).

8. Dispositif selon l'une quelconque des revendications 5 à 7, dans lequel le diamètre de la chambre cylindrique (72) est supérieur au diamètre du tuyau tubulaire (42) au travers duquel la résine s'écoule jusque dans la chambre (72).

9. Dispositif selon l'une quelconque des revendications 4 à 8, dans lequel les hyperfréquences sont introduites dans l'applicateur (54) au moyen d'un guide d'ondes (52), et l'interface entre le guide d'ondes et l'applicateur comprend une fenêtre (86), dont on peut faire varier la taille.
